# EUROPÄISCHE PATENTANMELDUNG

(11) **EP 4 516 176 A1**
(43) Veröffentlichungstag der Anmeldung: **05.03.2025**
(21) Anmeldenummer: 24193985.9
(22) Anmeldetag: 09.08.2024
(51) Int. Cl.: A47J 43/07, G01G 19/52

(54) **KÜCHENMASCHINE MIT INTEGRIERTER WAAGE UND VERFAHREN**

(30) Priorität: 30.08.2023 DE 102023208321
(71) Anmelder: BSH Hausgeräte GmbH, 81739 München (DE)
(72) Erfinder: Krüger, Tobias, 80639 München (DE)

(57) **Zusammenfassung**

Die Erfindung betrifft eine Küchenmaschine mit einer integrierten elektronischen Waage zum Abwiegen von Zutaten, wobei eine Wägegutaufnahme außerhalb eines Arbeitsraums wie einer Schüssel oder ein Mixbecher der Küchenmaschine angeordnet ist, sowie ein Verfahren zum Abwiegen von Wägegut.

## Beschreibung

Die vorliegende Erfindung betrifft eine Küchenmaschine mit einer integrierten elektronischen Waage zum Abwiegen von Zutaten nach dem Oberbegriff des Patentanspruchs 1, wobei Waagesensoren fußseitig der Küchenmaschine angeordnet sind, sowie ein Verfahren zum Abwiegen von Wägegut.

Moderne Küchenmaschinen mit einer Schüssel zum Verarbeiten von Zutaten wie die BOSCH MUM9AX5S00 haben eine integrierte elektronische Waage, die das Abwiegen von Zutaten in der in die Küchenmaschine eingesetzten Schüssel ermöglichen. Die Küchenmaschinen haben hierzu Waagesensoren, die in die Füße der Küchenmaschine integriert sind. Sind jedoch Zutaten bei nicht eingesetzter Schüssel abzuwiegen, ist eine zweite Waage erforderlich, die dann zum Abwiegen der Zutaten außerhalb der Schüssel verwendet wird.

Aufgabe der Erfindung ist es, eine Küchenmaschine für den Hausgebrauch zu schaffen, die ein Abwiegen von Wägegut außerhalb eines Arbeitsraums der Küchenmaschine ermöglicht, sowie ein Verfahren zu schaffen, dass eine Verwendung der integrierten Waage zum Abwiegen außerhalb des Arbeitsraums ermöglicht.

Diese Aufgabe wird gelöst durch eine Küchenmaschine mit den Merkmalen des Patentanspruchs 1 und durch ein Verfahren mit den Merkmalen des Patentanspruchs 8.

Eine erfindungsgemäße Küchenmaschine mit einer integrierten elektronischen Waage zum Abwiegen von Zutaten in einem Arbeitsraum der Küchenmaschine hat fußseitig angeordnete Waagesensoren. Erfindungsgemäß ist eine Wägegutaufnahme der Küchenmaschine außerhalb des Arbeitsraums angeordnet.

Die Wägegutaufnahme ermöglicht es, Wägegut wie Rezeptzutaten außerhalb des Arbeitsraums der Küchenmaschine wie einer in die Küchenmaschine eingesetzter Schüssel an einem definierten Platz der Küchenmaschine abzuwiegen. Die erfindungsgemäße Küchenmaschine hat somit zumindest zwei Wägebereiche - einen schüsselseitigen Arbeitsraum und einen außerschüsselseitigen Wägeraum. Die Verwendung einer zweiten Waage zum Abwiegen von Zutaten außerhalb der eingesetzten Schüssel entfällt. Während einer laufenden Zubereitung können somit weitere Rezeptzutaten über die Wägegutaufnahme abgewogen werden. Während einer laufenden Hauptfunktion wie Rühren oder Kneten können somit weitere Zutaten abgewogen werden ohne die laufende Hauptfunktion zu unterbrechen. Somit kann die Küchenmaschine neben ihrer Hauptnutzung als Küchenmaschine als solche, auch als einzelne Waage verwendet werden. Vorstellbar ist es zum Beispiel, die Küchenmaschine als Postwaage im privaten Bereich zu verwenden, um zu ermitteln, wie schwer ein Brief ist, um das richtige Briefporto zu bestimmen.

Bevorzugterweise hat die Wägegutaufnahme eine Wägefläche, die in ordnungsgemäßer Aufstelllage und in Normalposition der Küchenmaschine waagerecht orientiert ist. Durch diese Maßnahme kann das Wägegut sicher abgelegt werden. Dabei kann das Wägegut sowohl alleine, als auch über ein Gefäß auf der Wägegutaufnahme abgelegt werden.

Die Ablagesicherheit lässt sich erhöhen, wenn sich von der Wägefläche eine Vielzahl von gleich hohen Erhebungen erstrecken. Beispielhafte Erhebungen sind Stege, die beispielsweise sternförmig angeordnet sind oder buckelartige Erhebungen. Insbesondere wirken die Stege als Rippen und bewirken eine Stabilisierung der Wägegutaufnahme, so dass diese selbst gewichtsoptimiert ausführbar ist, das heißt mit einer möglichst dünnen Materialstärke ohne zu Lasten der Stabilität.

Die Wägegutaufnahme befindet sich bevorzugterweise in ordnungsgemäßer Aufstelllage und in Normalposition der Küchenmaschine in Hochrichtung (vertikal) über dem Arbeitsraum. Durch diese Maßnahme wird das Gewicht des Wägeguts gleichmäßig bzw. nahezu gleichmäßig auf die fußseitigen Waagesensoren verteilt.

Bei einem Ausführungsbeispiel ist die Anordnung der Wägegutaufnahme in Hochrichtung (vertikal) über dem Arbeitsraum in Normalposition dadurch realisiert, dass die Wägegutaufnahme einen Gehäuseabschnitt eines Motorarms der Küchenmaschine bildet.

Ergänzend kann die Wägegutaufnahme als ein von dem Motorarm getrenntes Bauteil hergestellt sein, das in einen Gehäuseausschnitt des Motorarms einsetzbar ist. Hierdurch ist es möglich, die Küchenmaschine nicht nur mit einer unteren, in Richtung des Arbeitsraums weisenden Werkzeugaufnahme zu versehen, sondern ebenfalls mit einer oberen Werkzeugaufnahme, die beispielsweise die Verwendung eines Mixbechers mit entsprechendem Werkzeug, eines Durchlaufschnitzlers oder einer Zitruspresse ermöglicht. Bei nicht Verwendung des Mixbechers ist die obere Werkzeugaufnahme unter der Wägegutaufnahme verborgen. Zudem lässt sich durch Entnahme eine Reinigung der Wägegutaufnahme getrennt vom Motorarm durchführen. Die Wägegutaufnahme kann aus einem leicht zu reinigen Material wie Edelstahl bestehen. Sie kann aber auch aus einem Kunststoff mit oder ohne Beschichtung gefertigt sein.

Bei einem alternativen Ausführungsbeispiel, wenn zum Beispiel die Küchenmaschine ein Standmixer ist, kann die Wägegutaufnahme anstelle eines Mixbechers auf einen Gehäuseabschnitt eines Motorblockes der Küchenmaschine aufsetzbar sein. Durch diese Maßnahme lässt sich ebenfalls ein Standmixer neben seiner eigentlichen Hauptfunktion Mixen als reine elektronische Waage verwenden.

Bei einem erfindungsgemäßen Verfahren zum Abwiegen von Wägegut unter Verwendung einer Küchenmaschine mit einer integrierten elektronischen Waage, wird das Wägegut auf einer Wägegutaufnahme der Küchenmaschine außerhalb von deren Arbeitsraum abgelegt. Bei eingeschalteter Küchenmaschine ermittelt dann die integrierte Waage ein Wägegutgewicht, welches dann im Anzeigenfeld der Küchenmaschine einem Anwender angezeigt wird. Alternativ kann ein Wägegutgewicht auch im Anzeigenfeld/auf einem Display eines elektronischen Gerätes (z.B. eines Mobiltelefons oder eines Tablets), mit dem die Küchenmaschine kommunizieren kann, angezeigt werden. Bevorzugt kann die Küchenmaschine per Wi-Fi oder Bluetooth (via z.B. einer Applikation) auch gesteuert bzw. geregelt werden.

Sonstige vorteilhafte Ausführungsbeispiele der Erfindung sind Gegenstand weiterer Unteransprüche.

Im Folgenden wird ein bevorzugtes Ausführungsbeispiel der Erfindung anhand von Darstellungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben. Es zeigen schematisch:
Figur 1: eine perspektivische Ansicht einer erfindungsgemäßen Küchenmaschine, und
Figur 2: eine Seitenansicht der erfindungsgemäßen Küchenmaschine.

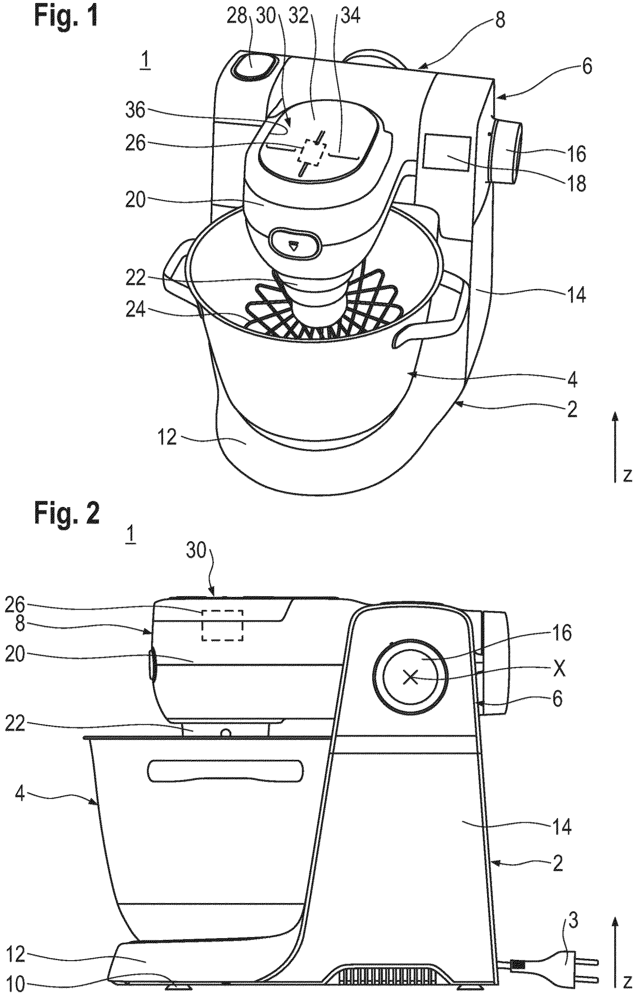

In den Figuren 1 und 2 ist ein bevorzugtes Ausführungsbeispiel einer erfindungsgemäßen elektrischen Küchenmaschine 1 gezeigt. Die Küchenmaschine 1 wird über eine Kabelverbindung 3 mit einem elektrischen Hausstromnetz verbunden. Die Küchenmaschine 1 hat einen Grundkörper 2, eine Schüssel 4, einen Bedien- und Anzeigenbereich 6, und einen schwenkbaren Motorarm 8.

Der Grundkörper 2 stellt die Basis der Küchenmaschine 1 dar. Er hat an seiner Unterseite Füße bzw. Standfüße 10 zum Abstellen der Küchenmaschine 1 auf einer Arbeitsplatte. Der Grundkörper 2 hat einen flachen Abschnitt 12 mit einer Aussparung zur Aufnahme der Schüssel 4.

Die Schüssel 4 bildet den Arbeitsraum der Küchenmaschine, in dem Zutaten geknetet, verrührt und dergleichen verarbeitet werden. Der flache Abschnitt 12 des Grundkörpers 2 hat an einer Seite einen aufrechten Abschnitt 14, der in den Bedien- und Anzeigenbereich 6 übergeht.

Der Bedien- und Anzeigenbereich 6 verfügt über einen Bedienschalter 16, hier einen seitlichen Drehschalter zum Einstellen von unterschiedlichen Betriebsmodi und ein Anzeigenfeld 18 zum Anzeigen von für einen Anwender wichtige Informationen wie zum Beispiel Restrührzeiten aufweist. An den Bedien- und Anzeigenbereich 6 ist der Motorarm 8 verschwenkbar angelenkt.

Der Motorarm 8 ist um eine Schwenkachse X aus einer dargestellten liegenden Position in eine nicht gezeigte stehende Position verschwenkbar. Er hat einen Kopfabschnitt 20, in dem ein Antrieb (Getriebe) mit einer unterseitigen Werkzeugaufnahme 22 integriert ist. In der dargestellten liegenden Position (untere Position) ist der Motoram 8 in Aufstelllage der Küchenmaschine 1 über die Schüssel 4 verschwenkt, so dass die untere Werkzeugaufnahme 22 in Richtung der Schüssel 4 orientiert ist und sich in der Schüssel 4 befindende Zutaten mittels eines in die untere Werkzeugaufnahme 22 eingesetzten Werkzeugs 24 verarbeitet werden können. Als beispielhaftes Werkzeug 24 ist hier ein Schneebesen gezeigt. Die gezeigte liegende Position wird in dieser Anmeldung auch als Normalposition bezeichnet. In der stehenden Position (obere Position) ist der Motorarm 8 nach hinten (in Figur 2 nach rechts) um ca. 90° veschwenkt und gibt somit die Schüssel 4 frei, so dass die Schüssel 4 entfernt oder eingesetzt, ein Werkzeug 24 gewechselt oder Zutaten bequem nachgefüllt werden können.

Zudem hat der Kopfabschnitt 20 eine mit dem Antrieb zusammenwirkende obere Werkzeugaufnahme 26, die entgegengesetzt zur unteren Werkzeugaufnahme 22 orientiert ist, so dass zum Beispiel ein Mixbecher mit einem entsprechenden Werkzeug oben auf dem Motorarm 8 verwendet werden kann. In der gezeigten Darstellung ist die obere Werkzeugaufnahme 26 in gestrichelten Linien schematisch dargestellt, da er unter einer erfindungsgemäßen, entfernbaren Wägegutaufnahme 30 angeordnet ist. Die erfindungsgemäße Wägeazufnahme wird im Folgenden noch erläutert.

Zum Entriegeln des Motorarms 8 zumindest aus seiner gezeigten liegenden Position ist an einem von der Bedien- und Anzeigenabschnitt 6 entfernt liegenden Motorarmabschnitt eine Entriegelungstaste 28 angeordnet.

Des Weiteren verfügt die Küchenmaschine 1 über eine integrierte elektronische Waage. Die Waage ermöglicht das Abwiegen von Zutaten in der Schüssel 4, wenn diese in die Küchenmaschine 1 eingesetzt ist. Hierzu sind in den Füßen 10 der Küchenmaschine 1 nicht gezeigte Waagesensoren angeordnet bzw. die Füße10 wirken mit Waagesensoren zusammen, so dass eine Gewichtszunahme verursacht durch eine Hinzugabe von Zutaten in die Schüssel 4 oder ein Entfernen von verarbeiteten Gut aus der Schüssel 4 im eingesetzten Zustand von der integrierten Waage erfasst wird. Die Waage wird über den Bedienschalter (Drehknopf) 16 aktiviert und ein erfasstes Gewicht über das Anzeigenfeld 18 angezeigt.

Die erfindungsgemäße Wägegutaufnahme 30 ermöglicht es einem Anwender, Wägegut außerhalb der eingesetzten Schüssel 4 und somit außerhalb des Arbeitsraums der Küchenmaschine 1 abzuwiegen.

Wie in Figur 1 gezeigt, hat die Wägegutaufnahme 30 eine plattenartige, flächige Erstreckung mit einer oberen, planen Wägefläche 32. Von der Wägefläche 32 ertrecken sich in dem gezeigten Ausführungsbeispiel vier gleich ausgebildete Erhebungen 34, die hier als Stege mit einer konstanten Höhe ausgeführt sind. Die Wägegutaufnahme 30 besteht aus einem gesundheitsunschädlichen, leicht zu reinigen Material wie Edelstahl und ist kopfseitig in einen Gehäuseausschnitt 36 des Motorarms 8 eingesetzt. Somit befindet sich die Wägegutaufnahme mit ihrer Wägefläche 32 in ordnungsgemäßer Aufstelllage und in Normalposition der Küchenmaschine 1 in Hochrichtung (z, vertikal) über dem Arbeitsraum.

Die Wägegutaufnahme 30 ist aus dem Gehäuseausschnitt 36 herausnehmbar, so dass dann die obere Werkzeugaufnahme 26 frei zugänglich ist, zudem aber auch die Reinigung der Wägegutaufnahme 30 erleichtert wird. Die Wägegutaufnahme 30 ist ohne Werkzeug aus dem Gehäuseausschnitt 36 herausnehmbar, dabei jedoch derart lagegesichert, dass bei einer Verschwenkung des Motorarms 8 aus seiner liegenden Position in seine stehende Position die flächige Wägegutaufnahme 30 nicht aus dem Gehäuseausschnitt 36 herausfällt.

Bei einem erfindungsgemäßen Verfahren zum Abwiegen von Wägegut unter Verwendung der vorbeschriebenen Küchenmaschine 1 mit einer integrierten elektronischen Waage, wird das Wägegut auf der Wägegutaufnahme 30 der Küchenmaschine 1 außerhalb von deren Arbeitsraum abgelegt. Hierzu wurde zuvor die Küchenmaschine 1 ordnungsgemäß aufgestellt und der Motorarm 8 in seine liegende Position gebracht, so dass die Wägefläche 32 waagerecht ausgerichtet ist. Bei eingeschalteter Küchenmaschine 1 ermittelt dann die integrierte Waage ein Wägegutgewicht, welches dann in dem Anzeigenfeld 18 der Küchenmaschine 1 einem Anwender angezeigt wird. Grundsätzlich ist es möglich, erst das Wägegut auf der Wägegutaufnahme 30 abzulegen und dann die Küchenmaschine 1 so einzuschalten, dass die Waage aktiviert ist. Alternativ kann auch erst die Küchenmaschine 1 so einzuschalten, dass die Waage aktiviert ist und dann das Wägegut auf der Wägegutaufnahme 30 abgelegt wird.

Die Erfindung betrifft eine Küchenmaschine mit einer integrierten elektronischen Waage zum Abwiegen von Zutaten, wobei eine Wägegutaufnahme außerhalb eines Arbeitsraums wie einer Schüssel oder ein Mixbecher der Küchenmaschine angeordnet ist, sowie ein Verfahren zum Abwiegen von Wägegut.

### Bezugszeichen

- 1: Küchenmaschine
- 2: Grundkörper
- 3: Kabelverbindung
- 4: Schüssel / Arbeitsraum
- 6: Bedien- und Anzeigenbereich
- 8: Motorarm
- 10: Füße
- 12: flacher Abschnitt
- 14: aufrechter Abschnitt
- 16: Bedienschalter (Drehknopf)
- 18: Anzeigenfeld
- 20: Kopfabschnitt
- 22: untere Werkzeugaufnahme
- 24: Werkzeug
- 26: obere Werkzeugaufnahme
- 28: Entriegelungstaste

- 30: Wägegutaufnahme
- 32: Wägefläche
- 34: Erhebungen
- 36: Gehäuseausschnitt

- X: Schwenkachse
- Z: Hochrichtung (vertikale Richtung)

## Patentansprüche

1. Küchenmaschine (1) mit einer integrierten elektronischen Waage zum Abwiegen von Zutaten in einem Arbeitsraum (4) der Küchenmaschine, wobei Waagesensoren fußseitig der Küchenmaschine (1) angeordnet sind, **dadurch gekennzeichnet, dass** eine Wägegutaufnahme (30) der Küchenmaschine (1) außerhalb des Arbeitsraums (4) angeordnet ist.

2. Küchenmaschine nach Patentanspruch 1, wobei die Wägegutaufnahme (30) eine Wägefläche (32) hat, die in ordnungsgemäßer Aufstelllage und in Normalposition der Küchenmaschine (1) waagerecht orientiert ist.

3. Küchenmaschine nach Patentanspruch 2, wobei sich von der Wägefläche (32) eine Vielzahl von gleich hohen Erhebungen (30) erstrecken.

4. Küchenmaschine nach Patentanspruch 1, 2 oder 3, wobei sich die Wägegutaufnahme (30) in ordnungsgemäßer Aufstelllage und in Normalposition der Küchenmaschine (1) in Hochrichtung (z) über dem Arbeitsraum (4) befindet.

5. Küchenmaschine nach einem der Patentansprüche, wobei die Wägegutaufnahme (30) ein Gehäuseabschnitt eines Motorarms (8) der Küchenmaschine (1) ist.

6. Küchenmaschine nach Patentanspruch 5, wobei die Wägegutaufnahme (30) in einen Gehäuseausschnitt (36) eines Motorarms (8) der Küchenmaschine (1) einsetzbar ist.

7. Küchenmaschine nach einem der Patentansprüche 1 bis 4, wobei die Wägegutaufnahme (30) anstelle eines Mixbechers auf einem Gehäuseabschnitt eines Motorblockes der Küchenmaschine (1) aufsetzbar ist.

8. Verfahren zum Abwiegen von Wägegut unter Verwendung einer Küchenmaschine (1) mit einer integrierten elektronischen Waage nach einem der vorhergehenden Patentansprüche, wobei Wägegut auf einer Wägegutaufnahme (30) der Küchenmaschine (1) außerhalb von deren Arbeitsraum (4) angelegt wird, und bei eingeschalteter Küchenmaschine (1) die integrierte Waage ein Wägegutgewicht ermittelt und dieses im Anzeigenfeld (18) der Küchenmaschine (1) angezeigt wird.
